(19) Europäisches Patentamt
European Patent Office
Office européen des brevets

(11) Veröffentlichungsnummer: **0 243 616 B1**

# (12) EUROPÄISCHE PATENTSCHRIFT

(45) Veröffentlichungstag der Patentschrift: **29.01.92**

(51) Int. Cl.⁵: **A01N 43/80**, //(A01N43/80, 33:08)

(21) Anmeldenummer: **87103044.1**

(22) Anmeldetag: **04.03.87**

## (54) Flüssige Zubereitungen von 1,2-Benzisothiazolin-3-on, ihre Herstellung und Verwendung.

(30) Priorität: **24.03.86 DE 3609939**

(43) Veröffentlichungstag der Anmeldung:
**04.11.87 Patentblatt 87/45**

(45) Bekanntmachung des Hinweises auf die Patenterteilung:
**29.01.92 Patentblatt 92/05**

(84) Benannte Vertragsstaaten:
**CH DE ES FR GB IT LI**

(56) Entgegenhaltungen:
**EP-A- 0 208 488**
**GB-A- 1 191 253**
**GB-A- 1 330 531**

(73) Patentinhaber: **CASSELLA Aktiengesellschaft**
**Hanauer Landstrasse 526**
**W-6000 Frankfurt am Main 61(DE)**

(72) Erfinder: **Bauer, Wolfgang, Dr.**
**Masurenstrasse 5**
**W-6457 Maintal 3(DE)**
Erfinder: **Bücking, Hans-Walter, Dr.**
**In den Padenwiesen 30**
**W-6233 Kelkheim(DE)**
Erfinder: **Wallhäusser, Karl-Heinz, Prof. Dr.**
**Lessingstrasse 20**
**W-6238 Hofheim(DE)**

(74) Vertreter: **Urbach, Hans-Georg, Dr. et al**
**Hanauer Landstrasse 526**
**W-6000 Frankfurt am Main 61(DE)**

EP 0 243 616 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft neue, antimikrobiell wirksame flüssige Zubereitungen von 1,2-Benzisothiazolin-3-on der Formel I mit einem oder mehreren Anim-oxethylaten der Formel II

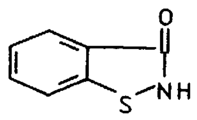

(I)

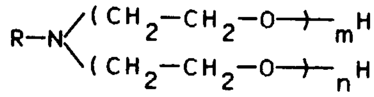

(II)

worin
R = Alkyl oder Alkenyl mit 8-22 C-Atomen
m + n = 2 bis 30
bedeuten, sowie deren Herstellung und Verwendung als technische Konservierungsmittel.

1,2-Benzisothiazolin-3-on wird aufgrund seiner bakteriziden und fungiziden Eigenschaften in der Technik als Biozid zum Schutz von wäßrigen Medien gegen Infektionen durch Mikroorganismen verwendet. Für diese Anwendungszwecke ist es wünschenswert, daß das 1,2-Benzisothiazolin-3-on in Form einer flüssigen Zubereitung vorliegt.

Zur Herstellung von flüssigen Zubereitungen von 1,2-Benzisothiazolin-3-on ist es bereits bekannt, das bei der Synthese anfallende rohe 1,2-Benzisothiazolin-3-on in Form einer wäßrigen Dispersion zu verwenden. Derartige wäßrige Dispersionen sind aber nicht lagerstabil, da beim Stehenlassen ein Absetzen auftritt.

Man war daher bemüht, das bei der Synthese anfallende rohe 1,2-Benzisothiazolin-3-on in möglichst hochkonzentrierte und gleichzeitig stabile flüssige Zubereitungen zu überführen. Eine Lösung dieses Problems besteht nach der GB-PS 1,191,253 darin, daß wäßrige Lösungen von rohem 1,2-Benzisothiazolin-3-on hergestellt werden, die zwei oder mehr verschiedene Amine, ausgewählt aus der Reihe Diethanolamin, Triethanolamin, Diisopropanolamin, Triisopropanolamin und Morpholin enthalten. In diesen wäßrigen Lösungen liegt das 1,2-Benzisothiazolin-3-on als Gemisch der Aminsalze vor.

Nach der GB-PS 1,330,531 werden Lösungen von rohem 1,2-Benzisothiazolin-3-onin aliphatischen, cycloaliphatischen oder heterocyclischen Aminen hergestellt, die 2 bis 6 C-Atome enthalten und die von Hydroxyl- und Ethergruppen frei sind.

Es wurde nun überraschenderweise gefunden, daß die erfindungsgemäßen Zubereitungen von 1,2-Benzisothiazol-3-on der Formel I mit einem oder mehreren Amin-oxethylaten der Formel II synergistische Effekte aufweisen und in der biologischen Aktivität den reinen Komponenten I bzw. II sowie den in der GB-PS 1,191,253 beschriebenen Kombinationen von 1,2-Benzisothiazolin-3-on mit Hydroxyethylaminen deutlich überlegen sind.

Die erfindungsgemäßen flüssigen Zubereitungen enthalten 1,2-Benzisothiazolin-3-on und ein oder mehrere Amin-oxyethylate der Formel II. Sie bestehen aus 1,2-Benzisothiazolin-3-on und einem oder mehreren Amin-oxethylaten der Formel II, wobei ein Teil des Amin-oxyethylats der Formel II auch durch Wasser und/oder ein oder mehrere mit Wasser mischbare organische Lösungsmittel und/oder ein oder mehrere Hilfsmittel und/oder Komplexbildner und/oder Wasserenthärtungsmittel ersetzt sein kann.

Sofern die erfindungsgemäßen flüssigen Zubereitungen nur aus 1,2-Benzisothiazolin-3-on der Formel I und aus einem oder mehreren Amin-oxethylaten der Formel II bestehen, enthalten sie normalerweise 3 bis 25 Gew.%, vorzugsweise 5 bis 15 Gew.%, 1,2-Benzisothiazolin-3-on der Formel I und 97 bis 75 Gew.%, vorzugsweise 95 bis 85 Gew.%, eines oder mehrerer Amin-oxethylate der Formel II.

In der Regel ist es schon aus Kostengründen zweckmäßig, einen Teil des Amin-oxethylats der Formel II durch Wasser und/oder ein oder mehrere mit Wasser mischbare organische Lösungsmittel zu ersetzen. Um einen möglichst großen Anteil des Amin-oxethylats in der genannten Weise unter Erhalt der erforderlichen Gebrauchseigenschaften, insbesondere der erforderlichen Lagerstabilität, ersetzen zu können, wird die Zusammensetzung derartiger erfindungsgemäßer flüssiger Zubereitungen zweckmäßigerweise wie folgt gewählt: 3 bis 25 Gew.% 1,2-Benzisothiazolin-3-on, 5 bis 50 Gew.% eines oder mehrerer Amin-oxethylate der Formel II, mindestens 10 Gew.% eines oder mehrerer mit Wasser mischbarer organischer Lösungsmittel, 0 bis 55 Gew.% Wasser, 0 bis 15 Gew.% eines oder mehrerer Hilfsmittel und 0 bis 5 Gew.% eines oder mehrerer Komplexbildner und/oder Wasserenthärtungsmittel.

Die obere Grenze des Prozentgehaltes für das organische Lösungsmittel oder Lösungsmittelgemisch ergibt sich als Differenz zu 100 %.

Vorteilhafterweise beträgt in derartigen Zubereitungen die Summe von 1,2-Benzisothiazolin-3-on und Amin-oxethylat 8 bis 60 Gew.%, und/oder das Gewichtsverhältnis von organischem Lösungsmittel oder Lösungsmittelgemisch zu Wasser beträgt vorteilhafterweise 1 : (0 bis 6), ganz besonders bevorzugt 1 : (0,8 bis 5).

Bei erfindungsgemäßen flüssigen Zubereitungen, die ein oder mehrere mit Wasser mischbare organische Lösungsmittel enthalten, ist die Zusammensetzung vorzugsweise 5 bis 15 Gew.% 1,2-Benzisothiazolin-3-on, 9 bis 45 Gew.% eines oder mehrerer Amin-oxethylate der Formel II, wobei die Summe von 1,2-Benzisothiazolin-3-on und Amin-oxethylat vorzugsweise 14 bis 45 Gew.% beträgt, 20 bis 55 Gew.% Wasser, 0 bis 10 Gew.% eines oder mehrerer Hilfsmittel, 0 bis 1 Gew.% eines oder mehrerer Komplexbildner und/oder Wasserenthärtungsmittel und 10 bis 35 Gew.% eines oder mehrerer mit Wasser mischbarer organischen Lösungsmittel.

Die erfindungsgemäßen flüssigen Zubereitungen werden in an sich bekannter Weise durch Vereinigen bzw. Vermischen der Komponenten hergestellt, wobei zweckmäßigerweise das organische Lösungsmittel oder Lösungsmittelgemisch und/oder gegebenenfalls das Amin-oxethylat der Formel II vorgelegt werden, worauf dann die übrigen Komponenten zugemischt werden. Bei der Zugabe von Wasser wird die Hauptmenge normalerweise erst zum Schluß zugegeben.

Das 1,2-Benzisothiazolin-3-on kann in Form des bei der Synthese anfallenden rohen Produktes, das heißt zum Beispiel in Form eines wasserfeuchten Preßkuchens, oder in reiner Form eingesetzt werden.

Die Amin-oxethylate der Formal II werden vorzugsweise in Form ihrer handelsüblichen technischen Gemische eingesetzt. Sie werden durch Umsetzung von Fettaminen der Formel $RNH_2$, zum Beispiel Cocosfettamin, Stearylamin, Oleylamin oder Talgfettamin mit Ethylenoxid, z.B. mit Ethoxylierungsgraden ($= n + m$) von 2 bis 30 hergestellt und stellen bezüglich des Restes R Gemische dar. In den bevorzugten Zusammensetzungen weisen die Amin-oxethylate der Formel II einen Oxethylierungsgrad ($= n + m$) von 2 bis 10, ganz besonders bevorzugt von 2, auf.

Wie aus den vorstehenden Angaben folgt, bedeutet dabei n eine Zahl von 1 bis 30, vorzugsweise von 1 bis 10 und ganz besonders bevorzugt die Zahlen 1 oder 2, während m eine Zahl von 0 bis 15, bevorzugt 0 bis 5 und ganz besonders bevorzugt 0 oder 1 bedeutet.

Als mit Wasser mischbare Lösungsmittel kommen beispielsweise in Betracht: niedere ein-, zwei- und dreiwertige Alkohole, Glykole, Di- und Polyglykole, Ether von Glykolen, Di- und Polyglykolen, wie z.B. Ethanol, i-Propanol; Propandiol-1,2, Propandiol-1,3, Glycerin, Butantriol-1,2,3, Butantriol-1,2,4, Ethylenglykol, Diethylenglykol, Triethylenglykol, Polyethylenglykol, Dipropylenglykol, Ethylenglykol-mono-methyl-ether, Ethylenglykol-mono-ethyl-ether, Ethylenglykol-mono-propyl-ether, Ethylenglykol-mono-butyl-ether, Diethylenglykol-mono-methyl-ether, Diethylenglykol-mono-ethyl-ether, Diethylenglykol-mono-propyl-ether, Diethylenglykol-mono-butyl-ether, Diethylenglykol-dimethyl-ether, Diethylenglykol-diethyl-ether.

Die Verwendung von Glykolen, wie z.B. 1,2-Propylenglykol oder Polyglykolen, wie z.B. Triethylenglykol ist bevorzugt. Es kann auch ein Gemisch verschiedener organischer Lösungsmittel in den erfindungsgemäßen Zubereitungen vorhanden sein.

Je nach dem Einsatzbereich der erfindungsgemäßen Zubereitungen kann es zweckmäßig sein, ihnen an sich bekannte nichtionogene und/oder anionische Hilfsmittel, wie Emulgierhilfsmittel, Dispergierhilfsmittel und/oder Tenside zuzusetzen. Diese Maßnahme kann erforderlich sein, wenn bei Anwendung und Verdünnung der erfindungsgemäßen Zubereitungen saure oder neutrale pH-Werte eingestellt werden und eine gute Feinverteilung des bei diesen pH-Werten teilweise ausgefallenen 1,2-Benzisothiazolin-3-ons erwünscht ist. Biologisch gut abbaubare Hilfsmittel sind dabei bevorzugt. Die Menge der zugesetzten Emulgier- und/oder Dispergierhilfsmittel und/oder Tenside beträgt normalerweise maximal 15 Gew.%, vorzugsweise maximal 10 Gew.%, bezogen auf die Zubereitung.

Ferner kann es zweckmäßig sein, zur Komplexierung von mehrwertigen Kationen, wie Calcium- oder Magnesiumionen, einen an sich bekannten Komplexbildner und/oder ein Wasserenthärtungsmittel zuzusetzen. Die Menge des zugesetzten Komplexbildners und/oder Wasserenthärtungsmittel beträgt normalerweise maximal 5 Gew.%, vorzugsweise maximal 1 Gew.%, bezogen auf die Zubereitung.

Selbstverständlich kann in der Zubereitung auch ein Gemisch verschiedener Hilfsmittel und/oder ein Gemisch verschiedener Komplexbildner und/oder Wasserenthärtungsmittel enthalten sein.

Die erfindungsgemäßen flüssigen Zubereitungen werden insbesondere als technische Konservierungsmittel eingesetzt und dienen u.a. beispielsweise zum Schutz bzw. zur Konservierung von Polystyrol-, Polyacrylat- und/oder Polyvinylacetat-Dispersionen, Farben, Bohr- und Schneideölen, Klebstoffen, Papierbeschichtungsmassen, Textilweichmachern, Schlichten auf Stärkebasis, Waschrohstoffen, Reinigungs- und Poliermitteln, Spinnbädern, Lederfinishes, Silikon- und Bitumenemulsionen und zur Behandlung von Industrieabwässern in der Papierherstellung oder von industriellem Kühlwasser.

Durch die bei den erfindungsgemäßen Zubereitungen nicht vorhersehbare synergistische Steigerung

der biologischen Wirksamkeit sind neben wirtschaftlichen vor allem auch ökologische Vorteile verbunden, da die Einsatzkonzentration des Wirkstoffs der Formel I beim Schutz von Materialien gegen mikrobiellen Befall deutlich gesenkt werden kann.

Die Erfindung wird durch folgende Beispiele weiter erläutert, wobei die Amin-oxethylate in Form von ®Genamin Handelsprodukten der Hoechst AG, Frankfurt/Main-80, zum Einsatz kommen. Diese ®Genamin Handelsprodukte sind Oxethylate von Fettaminen. Die ®Genamin Handelsmarken sind mit einem Zusatz aus einem der Buchstaben C, S, O oder T und einer Zahl versehen. Dabei bedeutet C Cocosfettamin mit einer ungefähren mittleren Kettenverteilung von 6% $C_8$, 6% $C_{10}$, 54% $C_{12}$, 18% $C_{14}$, 8% $C_{16}$ und 8% $C_{18}$; S bedeutet Stearylamin mit einer ungefähren mittleren Kettenverteilung von 5% $C_{14}$, 30% $C_{16}$ und 65% $C_{18}$; O bedeutet Oleylamin mit einer ungefähren mittleren Kettenverteilung von 1% $C_{12}$, 4% $C_{14}$, 12% $C_{16}$ und 83% $C_{18}$; T bedeutet Talgfettamin mit einer ungefähren mittleren Kettenverteilung von 5% $C_{14}$, 30% $C_{16}$ und 65% $C_{18}$. Die beigefügte Zahl ergibt durch 10 geteilt den Ethoxylierungsgrad. Zum Beispiel ist ®Genamin C-020 somit ein ethoxyliertes Cocosfettamin mit einem Ethoxylierungsgrad von 2.

Ethoxyliertes Cocosfettamin, Oleylamin, Stearylamin und Talgfettamin mit einem Ethoxylierungsgrad von 2 sind besonders bevorzugt.

Sofern nichts anderes angegeben ist, bedeuten Prozente Gewichtsprozente.

Beispiel 1:

132,5 g eines wasserfeuchten Preßkuchens von rohem 1,2-Benzisothiazol-3-on (Gehalt 75,5 %ig, Rest Wasser) werden bei 40 °C unter Rühren in eine Mischung von 300 g 1,2-Propylenglykol, 300 g Wasser und 195 g ®Genamin C-020 eingetragen. Durch Zusatz von Wasser stellt man auf 1 kg und erhält eine flüssige, lagerstabile Zubereitung mit einem Gehalt von 10 % 1,2-Benzisothiazol-3-on, 19,5 % ®Genamin C-020 und 30% 1,2-Propylenglykol, Rest Wasser.

In analoger Weise wie in Beispiel 1 lassen sich die erfindungsgemäßen Zubereitungen der nachfolgenden Beispiele 2 bis 14 herstellen.

Beispiel 2:

10% 1,2-Benzisothiazolin-3-on, 28,4% ®Genamin C-050,
20% 1,2-Propylenglykol, 41,6% Wasser.

Beispiel 3:

10% 1,2-Benzisothiazolin-3-on, 42,6% ®Genamin C-100,
20% 1,2-Propylenglykol, 27,4% Wasser.

Beispiel 4:

5% 1,2-Benzisothiazolin-3-on, 37% ®Genamin C-200,
10% 1,2-Propylenglykol, 48% Wasser.

Beispiel 5:

10% 1,2-Benzisothiazolin-3-on, 19,5% ®Genamin C-020,
10% ®Hostapur SAS 93 (handelsübliches Alkansulfonat der Hoechst AG), 20% 1,2-Propylenglykol, 40,5% Wasser.

Beispiel 6:

10% 1,2-Benzisothiazolin-3-on, 19,5% ®Genamin C-020,
10% ®Arkopal N 100 (handelsüblicher Nonylphenolpolyglykolether der Hoechst AG), 20% 1,2-Propylenglykol, 40,5% Wasser.

Beispiel 7:

10% 1,2-Benzisothiazolin-3-on, 19,5% ®Genamin C-020,
10% ®Genapol X 080 (handelsüblicher Fettalkoholpolyglykolether der Hoechst AG), 20% 1,2-Propylenglykol, 40,5% Wasser.

Beispiel 8:

10% 1,2-Benzisothiazolin-3-on, 19,5% ®Genamin C-020,
2% ® Emulsogen EL (handelsüblicher Emulgator der Hoechst AG), 20% 1,2-Propylenglykol, 48,5% Wasser.

Beispiel 9:

10% 1,2-Benzisothiazolin-3-on, 19,5% ®Genamin C-020,
0,5% ®Aquamollin BC (Wasserenthärtungsmittel der Cassella AG, Frankfurt/Main-Fechenheim), 20% 1,2-Propylenglykol, 50% Wasser.

Beispiel 10:

10% 1,2-Benzisothiazolin-3-on, 17% ®Genamin S-020,
30% 1,2-Propylenglykol, 43% Wasser.

Beispiel 11:

10% 1,2-Benzisothiazolin-3-on, 20% ®Genamin 0-020,
30% Polydiol 400 (Polyethylenglykol mit einem durchschnittlichen Molekulargewicht von 400), 40% Wasser.

Beispiel 12:

10% 1,2-Benzisothiazolin-3-on, 16% ®Genamin T-020,
30% Triethylenglykol, 44% Wasser.

Beispiel 13:

15% 1,2-Benzisothiazolin-3-on, 29,3% ®Genamin C-020,
30% Dipropylenglykol, 25,7% Wasser.

Beispiel 14:

5% 1,2-Benzisothiazolin-3-on, 9,8% ®Genamin C-020,
10% 1,2-Propylenglykol, 2% Glyzerin, 20% Isopropanol, 53,2% Wasser.

Beispiel 15:

10 Gewichtsteile 1,2-Benzisothiazolin-3-on werden unter Rühren in 90 Gewichtsteilen ®Genamin C-020 gelöst.

Vergleichsbeispiel mit einer nicht erfindungsgemäßen Zubereitung:

6,6 g eines wasserfeuchten Preßkuchens von rohem 1,2-Benzisothiazolin-3-on (Gehalt 75,5%, Rest Wasser) werden in einer Mischung aus 30 g 1,2-Propylenglykol, 50 g Wasser und 9,8 g Triethanolamin gelöst. Die mit Wasser auf 100 g gestellte Zusammensetzung enthält 5% 1,2-Benzisothiazolin-3-on, 9,8 % Triethanolamin, 30% 1,2-Benzisothiazolin-3-on, 9,8 % Triethanolamin, 30% 1,2-Propylenglykol und 55,2% Wasser. (Aus Löslichkeitsgründen kann keine wäßrige Formulierung höherer Konzentation hergestellt werden).

Prüfmethode

Die vergleichende Prüfung erfolgt im Reihenverdünnungstest unter Verwendung einer standardisierten Caseinpeptin-Sojapeptin-Bouillon (CSB), wie sie im Handel erhältlich ist. Die Verdünnungsstufen reichten von 400 µg/ml, 200 µg/ml, 100 µg/ml bis 6,26 µg/ml. Nach einer Bebrütung der Bakterien und Hefen bei 32 °C erfolgte die Ablesung der Hemmwirkung (Bakteristase und Fungistase) nach 24 Stunden und die

Angabe der MHK (minimale Hemmkonzentration) in µg/ml. Zur Ermittlung der mikrobizid (abtötend) wirkenden Konzentration (µg/ml) wurden alle im Reihenverdünnungstest ungetrübten Röhrchen (kein sichtbares Wachstum) auf Malzagarschrägröhrchen ausgestrichen und 24 Stunden bei 32 °C bebrütet. Als mikrobizide Konzentration (in µg/ml) wurde jener Wert festgelegt, bei denen auf den Schrägagarröhrchen kein Wachstum mehr zu beobachten war. Es wurden folgende Ergebnisse erhalten:

| | Zubereitungen | | | |
|---|---|---|---|---|
| | Beispiel 1 | | Vergleichsbeispiel | |
| Testorganismen | Hemmung bei µg/ml | Abtötung bei ug/ml | Hemmung bei ug/ml | Abtötung bei ug/ml |
| Staph. aureus | <6,25 | 50 | | 200 |
| E. Coli | 12,5 | 25 | 200 | 200 |
| Ps. aeruginosa | 100 | 100 | >200 | >200 |
| Candida albicans | 25 | 25 | >200 | >200 |

**Patentansprüche**

1. Flüssige, eine oder mehrere Amine enthaltende Zubereitung von 1,2-Benzisothiazolin-3-on, dadurch gekennzeichnet, daß sie als Amin oder Amine ein oder mehrere Amin-oxethylate der Formel II

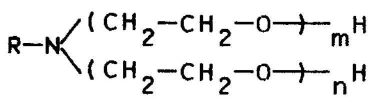

(II)

enthält, worin
R = Alkyl oder Alkenyl mit 2 bis 22 C-Atomen,
m + n = 2 bis 30 bedeuten.

2. Zubereitung nach Anspruch 1, dadurch gekennzeichnet, daß m + n = 2 bis 10 bedeutet.

3. Zubereitung nach Anspruch 1 und/oder 2, dadurch gekennzeichnet, daß n + m = 2 bedeutet.

4. Zubereitung nach einem oder mehreren der Ansprüche 1 bis 3, dadurch gekennzeichnet, daß sie 3 bis 25 Gew.% 1,2-Benzisothiazolin-3-on, 5 bis 50 Gew.% eines oder mehrerer Amin-oxethylate der Formel II, wobei die Summe aus 1,2-Benzisothiazolin-3-on und dem Amin-oxethylat der Formel II vorzugsweise 8 bis 60 Gew.% beträgt, mindestens 10 Gew.% eines oder mehrerer mit Wasser mischbarer organischer Lösungsmittel, 0 bis 55 Gew.% Wasser, 0 bis 15 Gew.% eines oder mehrerer Hilfsmittel, 0 bis 5 Gew.% eines oder mehrerer Komplexbildner und/oder Wasserenthärtungsmittel enthält.

5. Zubereitung nach einem oder mehreren der Ansprüche 1 bis 4, dadurch gekennzeichnet, daß sie 5 bis 15 Gew.% 1,2-Benzisothiazolin-3-on, 9 bis 45 Gew.% eines oder mehrerer Amin-oxethylate der Formel II, wobei die Summe von 1,2-Benzisothiazolin-3-on und Amin-oxethylat vorzugsweise 14 bis 45 Gew% beträgt, 20 bis 55 Gew.% Wasser, 0 bis 10 Gew.% eines oder mehrerer Hilfsmittel, 0 bis 1 Gew.% eines oder mehrerer Komplexbildner und/oder Wasserenthärtungsmittel und 10 bis 35 Gew.% eines oder mehrerer mit Wasser mischbarer organischer Lösungsmittel enthält.

6. Zubereitung nach einem oder mehreren der Ansprüche 1 bis 5, dadurch gekennzeichnet, daß das mit Wasser mischbare organische Lösungsmittel ein niederer ein-, zwei- oder dreiwertiger Alkohol, ein Glykol, Di- oder Polyglykol oder ein Ether eines Glykols, Di- oder Polyglykols ist.

7. Zubereitung nach einem oder mehreren der Ansprüche 1 bis 3, dadurch gekennzeichnet, daß sie aus 3 bis 25 Gew.%, vorzugsweise 5 bis 15 Gew.% 1,2-Benzisothiazolin-3-on und 97 bis 75 Gew.%, vorzugsweise 95 bis 85 Gew.%, eines oder mehrerer Amin-oxethylate der Formel II besteht.

8. Zubereitung nach einem oder mehreren der Ansprüche 4 bis 6, dadurch gekennzeichnet, daß in ihr das

Gewichtsverhältnis von organischem Lösungsmittel oder Lösungsmittelgemisch zu Wasser 1 : (0 bis 6), vorzugsweise 1 : (0,8 bis 5) beträgt.

**9.** Verfahren zur Herstellung der in einem oder mehreren der Ansprüche 1 bis 8 genannten Zubereitungen, dadurch gekennzeichnet, daß die Komponenten miteinander vermischt werden, wobei zweckmäßigerweise das organische Lösungsmittel oder Lösungsmittelgemisch und/oder gegebenenfalls das Amin-oxethylat vorgelegt werden.

**10.** Verwendung der Zubereitung nach einem oder mehreren der Ansprüche 1 bis 8 als technisches Konservierungsmittel.

**Claims**

**1.** Liquid formulation, containing one or more amines, of 1,2-benzisothiazol-3-one, characterized in that it contains as amine or amines one or more amineoxyethylates of the formula II

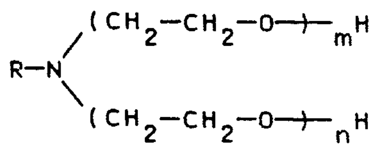

(II)

wherein R denotes alkyl or alkenyl with 2 to 22 C atoms and m + n denotes 2 to 30.

**2.** Formulation according to Claim 1, characterized in that m + n denotes 2 to 10.

**3.** Formulation according to Claim 1 and/or 2, characterized in that n + m denotes 2.

**4.** Formulation according to one or more of Claims 1 to 3, characterized in that it contains 3 to 25 % by weight of 1,2-benzisothiazolin-3-one, 5 to 50 % by weight of one or more amineoxyethylates of the formula II, the sum of 1,2-benzisothiazolin-3-one and the amine-oxyethylate of the formula II preferably being 8 to 60 % by weight, at least 10 % by weight of one or more water-miscible organic solvents, 0 to 55 % by weight of water, 0 to 15 % by weight of one or more auxiliaries and 0 to 5 % by weight of one or more complexing agents and/or water softeners.

**5.** Formulation according to one or more of Claims 1 to 4, characterized in that it contains 5 to 15 % by weight of 1,2-benzisothiazolin-3-one, 9 to 45 % by weight of one or more amineoxyethylates of the formula II, the sum of 1,2-benzisothiazolin-3-one and amineoxyethylate preferably being 14 to 45 % by weight, 20 to 55 % by weight of water, 0 to 10 % by weight of one or more auxiliaries, 0 to 1 % by weight of one or more complexing agents and/or water softeners and 10 to 35 % by weight of one or more water-miscible organic solvents.

**6.** Formulation according to one or more of Claims 1 to 5, characterized in that the water-miscible organic solvent is a lower mono-, di- or trihydric alcohol, a glycol or di- or polyglycol or an ether of a glycol or di- or polyglycol.

**7.** Formulation according to one or more of Claims 1 to 3, characterized in that it consists of 3 to 25 % by weight, preferably 5 to 15 % by weight, of 1,2-benzisothiazolin-3-one and 97 to 75 % by weight, preferably 95 to 85 % by weight, of one or more amineoxyethylates of the formula II.

**8.** Formulation according to one ore more of Claims 4 to 6, characterized in that the weight ratio of organic solvent or solvent mixture to water in it is 1 : (0 to 6), preferably 1 : (0.8 to 5).

**9.** Process for the preparation of the formulation mentioned in one or more of Claims 1 to 8, characterized in that the components are mixed with one another, the organic solvent or solvent mixture and/or, if appropriate, the amineoxyethylate advantageously being taken initially.

**10.** Use of the formulation according to one or more of Claims 1 to 8 as an industrial preservative.

**Revendications**

**1.** Préparation liquide de 1,2-benzisothiazoline-3-one contenant une ou plusieurs amines, préparation caractérisée en ce qu'elle contient comme amine ou amines un ou plusieurs produits d'oxéthylation d'amines de formule II ci-dessous

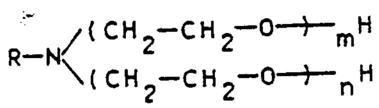

(II)

dans laquelle
le symbole R représente un alkyle ou un alcényle pouvant avoir de 2 à 22 atomes de carbone et
la somme m + n est comprise entre 2 et 30.

**2.** Préparation selon la revendication 1, caractérisée en ce que la somme m + n est comprise entre 2 et 10.

**3.** Préparation selon la revendication 1 et/ou 2, caractérisée en ce que la somme m + n est égale à 2.

**4.** Préparation selon une ou plusieurs des revendications 1 à 3, caractérisée en ce qu'elle contient de 3 à 25 % en poids de 1,2-benzisothiazoline-3-one, de 5 à 50 % en poids d'un ou de plusieurs produits d'oxéthylation d'amines de formule II, la somme de la 1,2-benzisothiazoline-3-one et du ou des produits d'oxéthylation de formule II étant de préférence comprise en 8 et 60 % en poids, au moins 10 % en poids d'un ou de plusieurs solvants organiques miscibles à l'eau, de 0 à 55 % en poids d'eau, de 0 à 15 % en poids d'un ou de plusieurs adjuvants et de 0 à 5 % en poids d'un ou plusieurs formateurs de complexes et/ou d'adoucisseurs d'eau.

**5.** Préparation selon une ou plusieurs des revendications 1 à 4, caractérisée en ce qu'elle contient de 5 à 15 % en poids de la 1,2-benzisothiazoline-3-one, de 9 à 45 % en poids d'un ou de plusieurs produits d'oxéthylation d'amines de formule II, la somme de la 1,2-benzisothiazoline-3-one et des produits d'éthoxylation étant de préférence comprise entre 14 et 45 % en poids, de 20 à 55 % en poids d'eau, de 0 à 10 % en poids d'un ou plusieurs adjuvants, de 0 à 1% en poids d'un ou plusieurs formateurs de complexes et/ou d'adoucisseurs d'eau et de 10 à 35 % en poids d'un ou plusieurs solvants organiques miscibles à l'eau

**6.** Préparation selon une ou plusieurs des revendications 1 à 5, caractérisée en ce que le solvant organique miscible à l'eau est un monoalcool, un dialcool ou un trialcool inférieur, un glycol, un diglycol ou un polyglycol ou encore un éther de glycol, de diglycol ou de polyglycol.

**7.** Préparation selon une ou plusieurs des revendications 1 à 3, caractérisée en ce qu'elle est constituée de 3 à 25 % en poids, de préférence de 5 à 15 %, de la 1,2-benzisothiazoline-3-one et de 97 à 75 % en poids, de préférence de 95 à 85 %, d'un ou de plusieurs produits d'oxéthylation d'amines de formule II.

**8.** Préparation selon une ou plusieurs des revendications 4 à 6, caractérisée en ce que le rapport pondéral du ou des solvants organiques à l'eau est compris entre 1:0 et 1:6, de préférence entre 1:0,8 et 1:5.

**9.** Procédé de préparation des préparations qui sont indiquées à une ou plusieurs des revendications 1 à 8, procédé caractérisé en ce que l'on mélange les divers composants les uns avec les autres, d'une manière appropriée en commençant par mettre dans le récipient de mélange le ou les solvants organiques et/ou le cas échéant le produit d'oxéthylation d'amines.

**10.** L'emploi d'une préparation selon une ou plusieurs des revendications 1 à 8 comme produit de

conservation industriel.